Europäisches Patentamt

European Patent Office

Office européen des brevets

(11) Veröffentlichungsnummer : **0 156 971**
**B1**

(12) **EUROPÄISCHE PATENTSCHRIFT**

(45) Veröffentlichungstag der Patentschrift :
30.11.88

(21) Anmeldenummer : 84114754.9

(22) Anmeldetag : 04.12.84

(51) Int. Cl.⁴ : **C 08 F220/10**, C 14 C 11/00 //
(C08F220/10, 220:04, 220:56,
212:06, 220:44, 218:08,
214:06)

(54) Verfahren zur Herstellung von wässrigen Polyacrylat-Copolymer-Dispersionen und ihre Verwendung bei der Zurichtung von Leder.

(30) Priorität : 08.12.83 DE 3344354

(43) Veröffentlichungstag der Anmeldung :
09.10.85 Patentblatt 85/41

(45) Bekanntmachung des Hinweises auf die Patenterteilung : 30.11.88 Patentblatt 88/48

(84) Benannte Vertragsstaaten :
DE FR GB IT NL

(56) Entgegenhaltungen :
FR-A- 1 325 985
FR-A- 2 266 723

(73) Patentinhaber : BASF Aktiengesellschaft
Carl-Bosch-Strasse 38
D-6700 Ludwigshafen (DE)

(72) Erfinder : Penzel, Erich, Dr.
Carl-Bosch-Strasse 86
D-6700 Ludwigshafen (DE)
Erfinder : Eckert, Guenter, Dr.
Flossbachstrasse 1
D-6703 Limburgerhof (DE)

**Beschreibung**

Die Erfindung betrifft ein Verfahren zur Herstellung von wäßrigen Polyacrylat-Copolymer-Dispersionen mit einer Teilchengröße von 10 bis 50 nm und ihre Verwendung bei der Zurichtung von Leder.

Es ist bekannt, daß man bei der Emulsionspolymerisation die Teilchengröße der Polymerpartikel durch die Menge und Art des vorgelegten Emulgators in einem recht breiten Bereich variieren kann. Die nach bekannten Methoden herstellbaren Teilchendurchmesser liegen in der Regel zwischen 50 und 800 nm. Um Dispersionen mit kleineren oder größeren mittleren Teilchendurchmessern herzustellen, sind verschiedene Verfahren beschrieben.

In der DE-A-25 56 327 wird beispielsweise ein Verfahren zur Herstellung von feinstteiligen Kunststoffdispersionen für Dispersionen, die zum verfestigenden Grundieren von Anstrichuntergründen eingesetzt werden, beschrieben. Die angegebenen Teilchendurchmesser liegen dabei zwischen 10 und 60 nm. Die entsprechenden Teilchengrößen werden, wie den Beispielen entnommen werden kann, durch die Polymerisation in Gegenwart eines anionischen und eines nichtionischen Emulgators erhalten. Nach unseren Erfahrungen wirken sich nichtionische Emulgatoren jedoch eher nachteilig aus, d. h. man erhält dann weniger feinteilige Dispersionen. Daraus folgt, daß im Hinblick auf die Teilchengrößes dieses Verfahren nicht optimal arbeitet.

In der japanischen Anmeldung 54103497 wird ein Verfahren beschrieben, nach dem Teilchendurchmesser von 5 bis 50 nm erhalten werden können. Als Initiator wird ein Redox-System aus Persulfat und einer Sulfoxy-Verbindung verwendet. Außerdem werden Elektrolyte als Viskositätsregler eingesetzt. Diese Maßnahmen führen insbesondere in Gegenwart von Elektrolyten eher zu einer Vergrößerung der Teilchendurchmesser.

In der US-PS 3 986 994 wird die Herstellung von feinteiligen Emulsionspolymerisaten von Terpolymeren aus Ethylen, Acrylmonomeren (Acrylsäure) und Alkylvinylmonomeren (Octadecen-1) beschrieben. Polymerisiert wird im alkalischen pH-Bereich bei Temperaturen von 60 bis 150 °C. Initiator ist Persulfat. Dieses Polymerisat wird für Farben und Fußbodenpflege-Mittel verwendet. Weiterhin gehen aus der FR-A-1 325 985 für die Beschichtung von Leder wäßrige Polyacrylat-Dispersionen eines Copolymeren aus wenigstens 80 Gew.-% Ethylacrylat, 7,5 bis 15 Gew.-% Acrylsäure und 1 bis 5 Gew.-% eines Monomeren mit vernetzenden Gruppen, und zwar N-Methylolmethacrylamid, hervor.

Es wurde nun gefunden, daß man bei der Herstellung von feinstteiligen Dispersionen mit mittleren Partikeldurchmessern von 10 bis 50 nm den Emulgator, den Initiator, die Reaktionstemperatur, den pH-Bereich und den Feststoffgehalt genau aufeinander abstimmen muß.

Gegenstand der Erfindung ist ein Verfahren zur Herstellung von wäßrigen Polyacrylat-Copolymer-Dispersionen mit 19,2 bis 40 Gew.-% Feststoffgehalt, das dadurch gekennzeichnet ist, daß man 90 bis 98 Gew.-% mindestens eines (Meth) acrylsäureesters mit 1 bis 8 C-Atomen im Esteralkohol, 2 bis 10 Gew.-% einer 3 bis 5 C-Atome enthaltende $\alpha,\beta$-monoolefinisch ungesättigte Monocarbonsäure und/oder deren Amid und ggfs. 10 bis 25 Gew.-% eines Monomeren aus der Gruppe Styrol, Acrylnitril, Vinylacetat und Vinylchlorid in Wasser in Gegenwart von 1 bis 10 Gew.-%, jeweils bezogen auf das Gesamtgewicht der Monomeren, mindestens eines anionischen Emulgators unter Verwendung von 0,1 bis 1,5 Gew.-% Wasserstoffperoxid und 0,01 bis 0,6 Gew.-% Ascorbinsäure und gegebenenfalls in Gegenwart von 0,001 bis 0,01 Gew.-% Eisen (II) Sulfat bei Temperaturen von 60 bis 85 °C und einem pH-Wert von 2 bis 5 polymerisiert, wobei Teilchengrößen von 10 bis 50 nm erhalten werden und die vorteilhafte Verwendung dieser wäßrigen Dispersionen für die Zurichtung von Leder.

Überraschend war, daß Leder nach Beschichtung mit den erfindungsgemäßen Dispersionen sein natürliches Aussehen beibehält, wobei im Leder vorhandene Narbenschäden kaschiert weden können. Es konnte auch nicht erwartet werden, daß man mit den feinstteiligen Dispersionen Echtheiten erhält, die genau so gut sind wie bei einer Zurichtung mit Dispersionen wesentlich größerer Teilchengrößen.

Als (Meth) acrylsäureester werden bevorzugt Acrylsäureester mit 1 bis 4 C-Atomen im Esteralkohol verwendet. Für die Zurichtung von Leder sind Copolymerisate mit Glastemperaturen von 0 bis —20 °C besonders geeignet. Werden Acrylsäureester verwendet, deren Homopolymerisate tiefere Glastemperaturen besitzten und die unter Umständen klebrig sind, können vorteilhaft zusätzliche Comonomere eingesetzt werden, deren Homopolymerisate hohe Glastemperaturen haben. Zweckmäßige Comonomere sind insbesondere Acrylnitril und Styrol. Davon ist das Acrylnitril besonders bevorzugt. Der mengenmäßige Anteil dieser Comonomeren kann dabei 10 bis 25 Gew.-% betragen.

Als $\alpha,\beta$-ungesättigte Monocarbonsäuren kommen insbesondere Acryl- und Methacrylsäure in Mengen von 2 bis 10 Gew.-%, bevorzugt 4 bis 6 Gew.-% und deren Amide in Betracht.

Bei der erfindungsgemäßen Herstellung feinstteiliger Dispersionen bewirken Acryl- und Methacrylsäureamide unter Umständen eine Vergrößerung der mittleren Teilchendurchmesser und sind daher nur dann zweckmäßig, wenn nicht extrem feinteilige Dispersionen hergestellt werden sollen. Interessanterweise üben Acryl- und Methacrylsäure in den verwendeten Mengen keinen Einfluß auf die Teilchengröße aus.

Die Gegenwart mindestens eines anionischen Emulgators ist für die Teilchenbildung bei der Emulsionspolymerisation von entscheidender Bedeutung. Dabei sind anionische Emulgatoren weit wirksamer als nichtionische. Besonders geeignete und bevorzugte Emulgatoren zur Herstellung der erfindungsgemäßen feinstteiligen Dispersionen sind Natriumlaurylsulfat, $C_{14}/C_{15}$-Alkylsulfonat, $C_{12}$-Alkylarylsulfonat und/oder Natriumdioctylsulfosuccinat, wobei Mengen zwischen 1 bis 10, besonders bevorzugt 2 bis 5 Gew.-% verwendet werden. Größere Mengen führen in der Regel zu größeren Teilchen.

Besonders bevorzugt im Hinblick auf die Stabilistät bei tiefen Temperaturen und das Schaumverhalten der erfindungsgemäßen Dispersionen ist die Kombination von Natriumlaurylsulfat und $C_{12}$-Alkylarylsulfonat. Der vorteilhafteste Mengenbereich liegt hier bei 3 Gew.-% Natriumlaurylsulfat und 1 Gew.-% $C_{12}$-Alkylarylsulfonat. Man kann aber auch im Mengenbereich von 2,5 bis 5 Gew.-% Natriumlaurylsulfat und 1 bis 7,5 Gew.-% $C_{12}$-Alkylarylsulfonat arbeiten. Ohne allerdings durch die höheren Emulgatormengen eine weitere Verbesserung der Feinteiligkeit zu erreichen. Ganz allgemein wird bei drastischer Erhöhung der Emulgatormenge eine Vergrößerung der Dispersionsteilchen beobachtet. In der Praxis wird man daher mit der geringsten notwendigen Menge arbeiten.

Feinstteilige Dispersionen erhält man auch mit einer Mischung von Natriumlaurylsulfat und Natriumdioctylsulfosuccinat. Günstige Mengenverhältnisse sind dabei 3 bis 5 Gew.-% Natriumlaurylsulfat und 5 bis 7 Gew.-% Natriumdioctylsulfosuccinat.

Zusätzliche Hilfsmittel, wie sie für die Herstellung von Mikroemulsionen bekannt sind, wie Fettalkohole (Dekanol oder Cetylalkohol), brauchen nicht verwendet zu werden, da sie die Stabilität der erfindungsgemäßen Dispersionen nur beeinträchtigen können.

Für die Herstellung von feinstteiligen Dispersionen ist das an sich bekannte Redox-System aus $H_2O_2$ und Ascorbinsäure mit und ohne Eisen (II) sulfat besonders geeignet. Die günstigsten Mengen liegen bei 0,1 bis 1,5 Gew.-% $H_2O_2$ und 0,01 bis 0,6 Gew.-% Ascorbinsäure. Bei Verwendung von Eisen (II) sulfat sollten 0,01 Gew.-% nicht überschritten werden, da sich sonst bei der Herstellung der Dispersion wenige aber bei der Anwendung störende Flocken bilden können. Die bevorzugte Menge liegt zwischen 0,001 bis 0,1 Gew.-% $FeSO_4 \cdot 7H_2O$.

Andere Redox-Systeme wie Kaliumpersulfat und Ascorbinsäure oder Persulfate und Rongalit C (eingetragenes Warenzeichen) liefern Dispersionen mit deutlich größeren Teilchen.

Bei der Polymerisation mit Peroxiden allein, z. B. mit Alkalypersulfat, erhält man ebenso weniger feinteilige Dispersionen, die außerdem häufig Flocken enthalten. Beispielsweise werden bei der Polymerisation von 94 Gew.-% Ethylacrylat und 6 Gew.-% Methacrylsäure in Gegenwart von 2 Gew.-% $C_{14}/C_{15}$-Alkylsulfonat bei erfindungsgemäßer Arbeitsweise Dispersionen mit einem LD-Wert (Lichtdurchlässigkeit der auf 1 Gew.-% verdünnten Dispersion) von 76 erhalten. In Gegenwart von 0,25, 0,5 und 0,75 % Natriumpersulfat werden LD-Werte von 59, 56 und 55 % erhalten.

Redox-Systeme werden üblicherweise dann verwendet, wenn die Polymerisation bei niedrigen Temperaturen erfolgen soll. So kann man mit $H_2O_2$ und Ascorbinsäure die Polymerisation bereits bei Raumtemperatur durchführen. Überraschend war daher, daß man bei der Herstellung von Mikrodispersionen bei einer Temperatur von 60 bis 85 °C etwas bessere Ergebnisse erhält als bei tieferen Temperaturen.

Der Feststoffgehalt der erfindungsgemäßen Dispersion beträgt zweckmäßig 19,2 bis 40, bevorzugt 20 bis 30 Gew.-%.

Der für die Polymerisation günstigste pH-Bereich liegt zwischen 2 bis 5. Bei tieferen pH-Werten findet eine drastische Vergrößerung des mittleren Teilchendruchmessers statt. Bei höheren pH-Werten ändert sich zwar die Teilchengröße nicht sonderlich, die Polymerisation macht dann aber Schwierigkeiten. Es wird kein akzeptabler Umsatz erreicht.

In der Regel wird die Polymerisation zur Herstellung der erfindungsgemäßen Dispersionen so durchgeführt, daß Emulgatoren und $H_2O_2$ mit dem gesamten Wasser in das Reaktionsgefäß vorgelegt und bis zur Reaktionstemperatur aufgeheizt wird. Das Reaktionsgefäß ist mit zwei Zulaufgefäßen ausgestattet. Das eine enthält die Monomeren und das andere eine wäßrige Lösung von Ascorbinsäure und gegebenenfalls Eisen (II) sulfat. Beide Zuläufe werden im Verlauf von 2 Stunden zugefahren, anschließend wird 2 Stunden nachpolymerisiert. Dann wird gekühlt und die Dispersion abgelassen.

Unter den einzuhaltenden Bedingungen stellt sich ein mittlerer Teilchendurchmesser der Dispersionen von 10 bis 50, bevorzugt 20 bis 30 nm ein.

Ein Maß für die mittlere Teilchengröße ist die Lichtdurchlässigkeit der Probe bei einer Konzentration von 1 Gew.-% (bei konventionellen Dispersionen wird die Konzentration von 0,01 Gew.-% häufig verwendet). Die Schichtdicke der durchstrahlten Probe beträgt 2,5 cm, die Wellenlänge des eingestrahlten Lichtes 0,546 nm. Bei Messungen mit der Ultrazentrifuge (Sedimentationslauf) erhält man die Teilchengrößenverteilung, wobei die mittleren Durchmesser von 10 %, 50 % und 90 % der Teilchen angegeben werden.

Die erfindungsgemäße Dispersion wird in an sich üblicher Weise für die Zurichtung von Leder verwendet.

Konventionelle Dispersionen haben im allgemeinen mittlere Teilchendurchmesser im Bereich von 100 bis 500 nm. Sie werden zusammen mit Pigmenten und den üblichen Hilfsstoffen mehrmals auf die Oberfläche des Leders aufgebracht, um die physikalischen Eigenschaften wie Reibechtheiten, Knickechtheiten und die Hydrophobie zu verbessern. Außerdem spielen ästhetische und modische Aspekte nach der Zurichtung eine wichtige Rolle.

Die Zurichtung mit diesen Bindemitteln führt häufig zu einem leicht plastikartiges Aussehen, da die Oberfläche des Leders mehr oder weniger zugedeckt wird. Trägt man mehrere Schichten auf, um Fehler in der Lederoberfläche abzudecken, so werden die Echtheiten verschlechtert und das plastikartige

3

Aussehen noch verstärkt.

Mit den erfindungsgemäßen feinteiligen Dispersionen erhält man Zurichtungen, bei danen das natürliche Aussehen des Leders erhalten bleibt, die Narbenfestigkeit verbessert wird und Hautfehler und Narbenschäden zugedeckt werden. Dabei werden die physikalischen Eigenschaften des Leders im Vergleich zu einer konventionellen Zurichtung nicht beeinträchtigt. Man erhält die gleichen Echtheiten. Das war nicht voraussehbar. Die feinstteiligen Dispersonen eignen sich besonders gut für die Zurichtung von weichen vollnarbigen Ledern für Bekleidung und Polsterbezüge.

Beispiele für die Herstellung der Mikrodispersionen

Beispiel 1

Man polymerisiert in einem Reaktionsgefäß, das mit Rührer, Thermometer, Rückflußkühler und zwei Zulaufgefäßen ausgestattet ist.

778 g Wasser, 4,9 g einer 40 %igen wäßrigen $C_{14}/C_{15}$-Alkylsulfonat-Lösung und 3,3 g einer 30 %igen Lösung von Wasserstoffperoxid werden in das Reaktionsgefäß eingebracht und auf 85 °C aufgeheizt.

Zulauf I enthält eine Mischung aus 185 g Ethylacrylat und 11,8 g Methacrylsäure. Zulauf II enthält eine Mischung aus 0,8 g Ascorbinsäure und 0,001 g Eisen (II) sulfat in 16,5 g Wasser.

Hat die Vorlage die Reaktionstemperatur erreicht, beginnt man zum gleichen Zeitpunkt mit den beiden Zuläufen, die im Verlauf von 2 Stunden in das Reaktionsgefäß eingebracht werden. Das Reaktionsgemisch mit einem pH-Wert von 2,8 wird weitere 2 Stunden auf 85 °C gehalten, dann wird gekühlt.

Die erhaltene wäßrige Polymerdispersion hat einen Feststoffgehalt von 20,3 % und eine Teilchengrößenverteilung von D (10 %) : 24 nm, D (50 %) : 28 nm, D (90 %) : 33 nm. Der LD-Wert beträgt 75 %.

Beispiel 2

Es wird, wie im Beispiel 1 angegeben, gearbeitet, nur besteht die Vorlage aus einer Mischung aus 40 g einer 15 %igen wäßrigen Lösung von Natriumlaurylsulfat, 13,3 g einer 15 %igen wäßrigen Lösung von $C_{12}$-Alkylarylsulfonat und 3,33 g einer 30 %igen Lösung von Wasserstoffperoxid in 689 g Wasser.

Zulauf I enthält eine Mischung aus 196 g Ethylacrylat und 4 g Methacrylsäure. Zulauf II ist eine Lösung von 0,1 g Ascorbinsäure und 0,002 g Eisen (II) sulfat in 100 g Wasser. Die Polymerisation erfolgt bei einem pH-Wert von 3,6.

Der Feststoffgehalt der wäßrigen Dispersion beträgt 19,6 %, der LD-Wert bei 1 %iger Konzentration beträgt 88 %. Mit der Ultrazentrifuge wurde folgende Teilchengrößenverteilung gefunden : D (10 %) : 20 nm, D (50 %) : 22 nm, D (90 %) : 25 nm.

Beispiel 3

Es wird, wie im Beispiel 1 angegeben, gearbeitet. Die Vorlage enthält eine Mischung aus 180 g einer 10 %igen Lösung von $C_{12}$-Alkylarylsulfonat und 3 g einer 30 %igen Lösung von Wasserstoffperoxid in 572 g Wasser. Der Zulauf I besteht aus 176 g t-Butylacrylat und 4 g Acrylsäure. Zulauf II ist eine Lösung von 0,54 g Ascorbinsäure und 0,0018 g Eisen (II) sulfat in 100 g Wasser. Die Polymerisation erfolgt bei 60 °C und einem pH-Wert von 2,8.

Der Feststoffgehalt beträgt 20,0 %, der LD-Wert 94 %. Mit der Ultrazentrifuge wurde folgende Teilchengrößenverteilung gefunden : D (10 %) : 12,3 nm, D (50 %) : 14,7 nm, D (90 %) : 18,2 nm.

Beispiel 4

Es wird, wie im Beispiel 1 angegeben, gearbeitet. Die Vorlage enthält eine Mischung aus 26,7 g einer 75 %igen wäßrigen Lösung von Natriumdioctylsulfosuccinat und 3,33 g einer 30 %igen Lösung von Wasserstoffperoxid in 598 g Wasser. Der Zulauf I enthält eine Mischung von 158 g n-Butylacrylat, 30 g Acrylnitril, 8 g Acrylsäure und 4 g Methylmethacrylat. Der Zulauf II enthält eine Lösung von 0,6 g Ascorbinsäure, 0,002 g Eisen (II) sulfat in 200 g Wasser. Die Polymerisation erfolgt bei einem pH-Wert von 3,5.

Der Feststoffgehalt der Polymerdispersion beträgt 19,9 %, der LD-Wert 74 %. Mit der Ultrazentrifuge wurde folgende Teilchengrößenverteilung erhalten : D (10 %) : 22 nm, D (50 %) : 27 nm, D (90 %) : 31 nm.

Beispiel 5

Es wird, wie im Beispiel 1 beschrieben, gearbeitet. Die Vorlage enthält 10 g einer 40 %igen wäßrigen Lösung von $C_{14}/C_{15}$-Alkylsulfonat und 3,33 g einer 30 %igen Lösung von Wasserstoffperoxid in 714 g Wasser. Der Zulauf I enthält eine Mischung aus 188 g Ethylacrylat, 6 g Methacrylsäure und 6 g Acrylamid. Zulauf II ist eine Lösung von 0,8 g Ascorbinsäure und 0,002 g Eisen (II) sulfat in 100 g Wasser. Die Polymerisation erfolgt bei einem pH-Wert von 2,9.

Der Feststoffgehalt beträgt 19,5 %, der LD-Wert 21 %. Mit der Ultrazentrifuge wurde folgende Teilchengrößenverteilung erhalten : D (10 %) : 28 nm, D (40 %) : 34 nm, D (90 %) : 44 nm.

## Beispiel 6

Es wird, wie im Beispiel 1 angegeben, gearbeitet. Die Vorlage besteht aus einer Mischung von 9,7 g einer 40 %igen Lösung von $C_{14}/C_{15}$-Alkylsulfonat und 3,2 g einer 30 %igen Lösung von Wasserstoffperoxid in 694,5 g Wasser. Der Zulauf I besteht aus einer Mischung von 175,1 g Ethylacrylat, 9,0 g Methacrylsäure und 9,0 g Methacrylsäureamid. Der Zulauf II ist eine Lösung von 0,78 g Ascorbinsäure und 0,002 g Eisen (II) sulfat in 97,3 g Wasser. Die Polymerisation erfolgt bei einem pH-Wert von 4,9.

Der Feststoffgehalt beträgt 19,2 %, der LD-Wert 21 %. Mit der Ultrazentrifuge wurde folgende Teilchengrößenverteilung erhalten : D (10 %) : 30 nm, D (50 %) : 39 nm, D (90 %) : 48 nm.

## Anwendungsbeispiele

Oberflächenveredelung (Zurichtung) von Leder

## Beispiel 7

Dies Beispiel beschreibt eine konventionelle Zurichtung mit einer Dispersion aus Polyacrylaten mit einem mittleren Teilchendurchmesser von 100 bis 150 nm.

Es wird eine Mischung aus 100 Teilen einer wäßrigen handelsüblichen Pigmentzubereitung, 610 Teilen Wasser, 200 Teilen einer 40 %igen Polyacrylatdispersion, 50 Teilen einer Montanwachs-Dispersion und 40 Teilen einer colloidalen Lösung von Casein hergestellt. Das Leder wird mit der Mischung 2 bis 3 mal gespritzt, dann wird die Appretur aus 200 Teilen Nitrocelluloseemulsion in 100 Teilen Wasser aufgetragen.

## Beispiel 8

Dies Beispiel beschreibt eine Zurichtung mit einer konventionellen Dispersion aus Polyacrylaten mit einem mittleren Teilchendurchmesser von 350 bis 450 nm.

Man verfährt wie im Beispiel 7 angegeben, nur wird jetzt eine Mischung aus 100 Teilen einer wäßrigen Pigmentzubereitung, 700 Teilen Wasser, 150 Teilen einer 60 %igen Polyacrylatdispersion und 50 Teilen einer Montanwachs-Dispersion aufgespritzt.

## Beispiel 9

Dieses Beispiel beschreibt eine Zurichtung mit einer Mikrodispersion, hergestellt nach Beispiel 1.

Es wird eine Mischung aus 100 Teilen einer wäßrigen Pigmentzubereitung, 580 Teilen Wasser, 250 Teilen einer 20 %igen Polyacrylatdispersion gemäß Beispiel 1, 50 Teilen einer Montanwachs-Dispersion und 20 Teilen einer colloidalen Lösung von Casein hergestellt.

Mit dieser Mischung wird das Leder 5 bis 7 mal gespritzt, dann wird die Appretur aus 200 Teilen einer Nitrocelluloseemulsion in 100 Teilen Wasser aufgetragen. Abschließend wird drucklos bei 80 °C gebügelt.

## Beispiel 10

Dieses Beispiel beschreibt eine Zurichtung mit einer Mikrodispersion, hergestellt nach Beispiel 5.

Man verfährt wie im Beispiel 9 beschrieben, nur wird jetzt eine Mischung aus 100 Teilen einer wäßrigen Pigmentzubereitung, 560 Teilen Wasser, 250 Teilen einer 20 %igen Polyacrylatdispersion gemäß Beispiel 5 und 40 Teilen einer Montanwachs-Dispersion aufgespritzt.

Beurteilung der behandelten Leder

| Eigenschaften | | Beispiele 7 + 8 | Beispiele 9 + 10 |
|---|---|---|---|
| Ballyflexometer | trocken | 50.000 | 50.000 |
| | naß | 20.000 | 20.000 |
| Reibechtheiten | trocken | 600 | 600 |
| (nach JUF 450) | naß | 300 | 300 |

# 0 156 971

Tabelle (Fortsetzung)

| Eigenschaften | Beispiele 7 + 8 | Beispiele 9 + 10 |
|---|---|---|
| Organoleptische Beurteilung | plastikartiges Aussehen, trockener kalter Griff | fast keine Veränderung des natürlichen Aussehens und des Griffs, warmer Griff |

Die Tabelle zeigt, daß bei den Echtheitseigenschaften, gemessen am Ballyflexometer und an den Reibechtheiten zwischen konventionellen und erfindungsgemäßen Dispersionen keine Unterschiede bestehen. Bei den organoleptischen Eigenschaften ergeben sich deutliche, nicht vorhersehbare Unterschiede.

**Patentansprüche**

1. Verfahren zur Herstellung von wäßrigen Polyacrylat-Copolymer-Dispersionen mit 19,2 bis 40 Gew.-% Feststoffgehalt, dadurch gekennzeichnet, daß man

90 bis 98 Gew.-% mindestens eines (Meth) acrylsäureesters mit 1 bis 8 C-Atomen im Esteralkohol,

2 bis 10 Gew.-% einer 3 bis 5 C-Atome enthaltenden $\alpha,\beta$-monoolefinisch ungesättigten Monocarbonsäure und/oder deren Amid und gegebenenfalls

10 bis 25 Gew.-% eines Monomeren aus der Gruppe Styrol, Acrylnitril, Vinylacetat und Vinylchlorid in Wasser in Gegenwart von 1 bis 10 Gew.-%, jeweils bezogen auf das Gesamtgewicht der Monomeren, mindestens eines anionischen Emulgators unter Verwendung von 0,1 bis 1,5 Gew.-% Wasserstoffperoxid und 0,01 bis 0,6 Gew.-% Ascorbinsäure und ggf. in Gegenwart von 0,001 bis 0,01 Gew.-% Eisen (II) sulfat bei Temperaturen von 60 bis 85 °C und einem pH-Wert von 2 bis 5 polymerisiert, wobei Teilchengrößen von 10 bis 50 nm erhalten werden.

2. Verwendung der wäßrigen Dispersion nach Anspruch 1 für die Zurichtung von Leder.

**Claims**

1. A process for the preparation of an aqueous polyacrylate copolymer dispersion having a solids content of from 19.2 to 40 % by weight, wherein

from 90 to 98 % by weight of one or more (meth) acrylates of alcohols of 1 to 8 carbon atoms and

from 2 to 10 % by weight of an $\alpha,\beta$-monoolefinically unsaturated monocarboxylic acid of 3 to 5 carbon atoms and/or its amide, with or without

from 10 to 25 % by weight of a monomer from the group consisting of styrene, acrylonitrile, vinyl acetate and vinyl chloride, are polymerized in water in the presence of from 1 to 10 % by weight, based in each case on the total weight of the monomers, of one or more anionic emulsifiers, using from 0.1 to 1.5 % by weight of hydrogen peroxide and from 0.01 to 0.6 % by weight of ascorbic acid, and in the presence or absence of from 0.001 to 0.01 % by weight of iron (II) sulfate, at from 60 to 85 °C and a pH of from 2 to 5, the particle sizes obtained being from 10 to 50 nm.

2. Use of the aqueous dispersion as claimed in claim 1 for finishing leather.

**Revendications**

1. Procédé de préparation de dispersions aqueuses de copolymères de polyacrylate avec une teneur en matières solides de 19,2 à 40 % en poids, caractérisé en ce qu'on polymérise

90 à 98 % en poids d'au moins un ester d'acide (méth) acrylique ayant de 1 à 8 atomes de carbone dans la partie alcool de l'ester,

2 à 10 % en poids d'un acide monocarboxylique à insaturation $\alpha,\beta$-mono-oléfinique contenant de 3 à 5 atomes de carbone et/ou de son amide, et éventuellement

10 à 25 % en poids d'un monomère du groupe comprenant le styrène, l'acrylonitrile, l'acétate de vinyle et le chlorure de vinyle, dans de l'eau en présence de 1 à 10 % en poids, à chaque fois par rapport au poids total des monomères, d'au moins un émulsifiant anionique en utilisant de 0,1 à 1,5 % en poids de peroxyde d'hydrogène et de 0,01 à 0,6 % en poids d'acide ascorbique, et éventuellement en présence de 0,001 à 0,01 % en poids de sulfate de fer (II), à des températures de 60 à 85 % et à des pH de 2 à 5, ce qui fait que l'on obtient des grosseurs de particules de 10 à 50 nm.

2. Utilisation des dispersions aqueuses selon la revendication 1 pour l'apprêtage du cuir.

6